# EUROPEAN PATENT APPLICATION

(11) **EP 3 539 906 A1**
(43) Date of publication of application: **18.09.2019**
(21) Application number: 18162384.4
(22) Date of filing: 16.03.2018
(51) Int. Cl.: B65G 17/40, B65G 43/02

(54) **LOAD-SENSING MODULE ASSEMBLY FOR A MODULAR CONVEYOR BELT**

(71) Applicant: Habasit AG, 4153 Reinach (CH)
(72) Inventor: ELSNER, Dietmar, 79539 Lörrach (DE); RICHARDSON, Andrew, 68220 Michelbach-le-Haut (FR)
(74) Representative: Bohest AG

(57) **Abstract**

The present invention relates to a load-sensing module assembly (1030) for a modular conveyor belt. The module assembly (1030) comprises a first module (1100) and a second module (1200) configured for arrangement in adjacent rows of the conveyor belt, which are linked together by at least one first link (1120) of the first module (1100) and at least one second link (1220) of the second module (1200). The load-sensing module assembly (1030) further comprises a sensor circuitry (1300) including a load sensor (1170) for measuring a belt tension in at least a portion of the module assembly (1030). The load sensor (1310) is arranged at the first link (1120) for measuring a tensile force between the first and second module (1100, 1200).

## Description

### FIELD OF THE INVENTION

The present invention generally relates to modular conveyor belts, in particular to modular side-flexing radius or spiral conveyor belts. More particularly, the present invention relates to a load-sensing module assembly for measuring the belt tension in such modular conveyor belts.

### BACKGROUND OF THE INVENTION

Modular conveyor belts are widely used in numerous industries to easily move material from one place to another. In general, modular conveyor belts comprise a series of rows of one or more belt modules arranged in a parallel configuration. Typically, modules of adjacent rows are linked together by hinge rods received in lateral passages that are formed in interleaved hinge elements arranged at the outer transverse sides, that is, the leading and trailing sides of each module. To enable monitoring of the performance and possible operational failures of the conveyor belt as well as to allow for adjustment of the belt tension, detection of the tensile forces within the conveyor belt, in particular between adjacent modules, is crucial. With regard to so-called side-flexing radius or spiral conveyor belts, it is particularly desirable to locally detect the belt tension of the outside portion of a turn, where a majority of the belt tension is borne.

US 7 635 060 B2 describes a conveyor belt of this type, wherein at least one belt module is a load-sensing belt module linked to a complementary belt module by a two-axis hinge joint that includes a hinge pin. A load-sensitive sensor assembly is disposed at thinned portions within the hollow hinge pin such as to be sensitive to shear stress occurring in the pin, when the load-sensing module and the complementary module are pulled in opposite directions. However, the specific setup of this load-sensing module is technically rather complex. In particular, the fact that the load-sensing belt module and the sensor carrying hinge pin are arranged in different parts moving relative to each other requires a flexible wiring between the load-sensing belt module and the hinge pin. Yet, a flexible wiring is susceptible to faults, in particular to cable breakage. Moreover, measuring the shear stress in the pin is not a direct indicator for the belt tension along the direction of travel of the conveyor belt, but requires careful sensor calibration and data conversion.

Therefore, it is an object of the invention to provide a measuring system for a modular conveyor belt that is technically less complex and enables a more direct measurement of tensile forces between adjacent belt modules, in particular a direct measurement of tensile forces substantially along the direction of travel of the conveyor belt.

### SUMMARY OF THE INVENTION

These and other objects are met by a load-sensing module assembly for a modular conveyor belt as specified by the features of the independent claim. Advantageous embodiments of the load-sensing module assembly according to the invention are the subject of the dependent claims.

According to a first aspect of the invention there is provided a load-sensing module assembly for a modular conveyor belt. The modular conveyor belt comprises successive rows of one or more belt modules linked together by hinge elements, in particular interleaving hinge elements, wherein each row extends in the direction generally perpendicular to the direction of travel of the conveyor belt. The module assembly comprises at least a first module and a second module which are configured for arrangement in adjacent rows of the conveyor belt. The first module and the second module are linked together by at least one first link of the first module and at least one second link of the second module. The first link and the second link are arranged at opposing transverse sides of the first and second module, respectively. Furthermore, the module assembly is configured to be linked with at least one hinge elements of at least one belt module of a respective adjacent row of the conveyor belt along either transverse outer side of the module assembly. In addition, the load-sensing module assembly comprises a sensor circuitry including a load sensor for measuring a belt tension in at least a portion of the module assembly. According to the invention, the load sensor is arranged at the first link for measuring a tensile force between the first and second module.

In contrast to the load-sensing modules known from the prior art, the load-sensing module assembly according to the present invention is directly arranged at the link of the first module. Due to this, the load sensor is able to directly measure tensile forces between the first and second module and, thus, to directly measure tensile forces along the direction of travel of the conveyor belt. In addition, attaching the load sensor to the first link and thus to the first module itself - instead of attaching the load sensor to a hinge pin that is not of the module - proves advantageous as the load sensor does not require any re-calibration after having been attached and calibrated once only. In contrast, a load sensor being attached to a sensor carrying hinge pin that is not part of the module itself requires careful re-calibration of the actual belt tension versus the measured shear stress in the pin each time the hinge pin is re-installed, for example after replacement of a belt module that is linked by the load-sensitive hinge pin.

Furthermore, having the load sensor arranged at the first link allows the sensor circuitry - including the load sensor - to be exclusively attached to the first module. Consequently, according to a preferred aspect of the invention, the sensor circuitry may be exclusively attached to the first module. Due to this, the electronic part of the load-sensing module assembly can be simple and compact. In particular, wiring between parts of the module assembly moving relative to each other can be avoided at all. Advantageously, this makes the load-sensing module assembly more robust and less susceptive to faults, in particular to cable breakage. Moreover, having the sensor circuitry exclusively attached to the first module allows for fully encapsulating the sensor circuitry within the first module. Advantageously, this facilitates sealing off and protecting the sensor circuitry, in particular the load sensor, from detrimental influences such as a wet environment, for example during cleansing of the conveyor belt used in food processing.

With regard to this, the load sensor, in particular when being attached to an outer surface of the first link, may be encapsulated, for example, with silicone. Alternative or additionally, the load sensor may be protected by a cover, in particular a sleeve or jacket, for example made of steel, preferably of stainless steel. Likewise, other parts of the sensor circuitry, for example a circuit board, may be encapsulated, for example, with silicone, and/or covered by a housing.

According to a preferred aspect of the invention, the load sensor may include at least one strain gauge. A strain gauge is characterized by its electrical resistance which varies in proportion to the amount of strain exerted thereto. Preferably, the strain gauge is a bonded metallic strain gauge. The metallic strain gage consists of a fine wire or, more commonly, metallic foil arranged in a grid or meandering pattern. The grid or meandering pattern maximizes the amount of metallic wire or foil subject to strain in the parallel direction. The grid is bonded to a thin carrier, which is to be attached directly to the test specimen, in the present case to the first link. Therefore, the strain experienced by the first link is transferred directly to the strain gauge, which responds with a linear change in its electrical resistance.

According to another preferred aspect of the invention, the load sensor may include at least one longitudinal strain gauge arranged such as to be sensitive along a direction parallel to a length extension of the first link along a direction of travel of the conveyor belt, that is, substantially parallel to the principal axis of strain between the first and second module. The direction is substantially perpendicular to the opposing transverse sides of the first and second module. Thus, the axial strain between the first and second module can be measured directly.

In addition to the at least one longitudinal strain gauge, the load sensor may further include at least another strain gauge. The other strain gauge may be arranged transverse to the principal axis of strain and in close thermal contact to the first link, but not bonded to the first link. Thus, the other strain gauge is substantially insensitive to strain, but any temperature changes affect both gauges in the same way. Because the temperature changes are identical in the two strain gauges, the ratio of their resistance does not change, thus allowing for minimizing temperature effects on the strain measurement.

Likewise, in addition to the at least one longitudinal strain gauge, the load sensor may further include at least one parallel strain gauge attached to the first link and arranged such as to be sensitive along a direction perpendicular to a length extension of the first link along a direction of travel of the conveyor belt, that is, substantially parallel to the opposing transverse sides of the first and second module. Advantageously, this at least one parallel strain gauge allows for compensation of forces that are not along the principal axis of strain, for example for minimizing adverse Poisson strain effects.

According to a particularly preferred aspect of the invention, the load sensor may include at least two longitudinal strain gauges arranged to be sensitive along a direction parallel to a length extension of the first link along a direction of travel of the conveyor belt, and at least two transverse strain gauges arranged to be sensitive along a direction perpendicular to a length extension of the first link along a direction of travel of the conveyor belt. Preferably, two pairs each of which comprising one longitudinal strain gauge and one transverse strain gauge are arranged on opposite longitudinal sides of the first link. Advantageously, this configuration permits compensation for Poisson effects and minimization of temperature effects.

To accurately measure the linearly changing electrical resistance of the various strain gauges, the sensor circuitry may preferably comprise a Wheatstone bridge having four resistive arms, wherein a respective one of the at least one or two longitudinal or transverse strain gauges is arranged in a respective one of the four restive arms. In case of a single longitudinal strain gauge, the single strain gauge may be arranged in one of the four restive arms in a so-called quarter-bridge configuration. In case of two strain gauges, in particular of one longitudinal and one transverse strain gauge, the two strain gauges may be arranged in two resistive arms being in serial connection, in a so-called half-bridge configuration. In case of four strain gauges, in particular two longitudinal and two transverse strain gauges, these four strain gauges may be arranged in a so-called full-bridge configuration, in particular a diagonal full-bridge configuration. In the full bridge configuration, each resistive arm includes one of the four strain gauges, wherein respective pairs of one longitudinal strain gauge and one transverse strain gauge may preferably be arranged in two resistive arms being in serial connection.

Preferably, the at least one first link may protrude from the transverse side of the first module opposing the transverse side of the second module in a direction parallel to a direction of travel of the conveyor belt. Likewise, the at least one second link may protrude from the transverse side of the second module opposing the transverse side of the first module in a direction parallel to a direction of travel of the conveyor belt, opposite to the direction of extension of the first link of the first module.

In principle, the first module may be a leading module and the second module may be a trailing module with regard to the direction of travel of the conveyor belt. In this configuration, the at least one first link may protrude from the transverse side of the first module opposing the transverse side of the second module in a direction opposite to the direction of travel of the conveyor belt, whereas the at least one second link may protrude from the transverse side of the second module opposing the transverse side of the first module in the direction of travel of the conveyor belt. Alternatively, the first module may be a trailing module and the second module may be a leading module with regard to the direction of travel of the conveyor belt. In this configuration, the at least one first link may protrude from the transverse side of the first module opposing the transverse side of the second module in the direction of travel of the conveyor belt, whereas the at least one second link may protrude from the transverse side of the second module opposing the transverse side of the first module in a direction opposite to the direction of travel of the conveyor belt.

For linkage with standard belt modules of a respective adjacent row, each of the first module and the second module may comprise at least one, in particular a plurality of outer hinge elements which are arranged along a respective outer transverse side opposite to the opposing transverse inner sides of the first and second module. The one or more outer hinge elements are configured to interleave with hinge elements of at least one belt module of a respective other adjacent row of the conveyor belt. That is, the outer hinge elements of the first module are configured to interleave with hinge elements of at least one belt module of an adjacent row other than the adjacent row that includes the second module. Likewise, the outer hinge elements of the second module are configured to interleave with hinge elements of at least one belt module of an adjacent row other than the adjacent row that includes the first module.

According to a further aspect of the invention, the module assembly may comprise at least one third module in addition to the first and second module. This third module is arranged adjacent to the first module opposite to the second module and configured for arrangement in a row adjacent to the row of the first module opposite to the row of the second module. The third module and first module are linked together by at least one third link of the third module and at least one fourth link of the first module, wherein the third and fourth links are arranged at opposing transverse sides of the first and third module, respectively. In this configuration, the first module is arranged between the second and third module. Thus, the second and third module form outer (leading and trailing) modules of the module assembly that are configured to be linked with hinge elements of at least one standard belt module of a respective adjacent row of the conveyor belt along either transverse outer side of the module assembly. Due to this, the first module does not need to be configured for linkage with any standard belt module of a respective adjacent row, in particular does not comprise any outer hinge elements. Advantageously, this allows the first module to provide additional space, e.g. for accommodating a larger power supply or larger number of batteries. In order to further maximize this additional space, the third and first module may linked together exclusively by the third link of the third module and the fourth link of the first module. In case the module assembly comprises three modules, it is the second and third module each of which comprises at least one outer hinge element which is arranged along a respective outer transverse side opposite to the respective transverse sides facing the first module.

According to a preferred aspect of the invention, the first module may comprise a main body, wherein the first link is attached to the main body. According to this aspect, the first link is not integral with main body, but separate therefrom. Advantageously, this simplifies manufacturing of the first module, in particular machining of the first link and the main body as well as mounting of the load sensor to the first link. As a result, this also reduces costs for manufacturing. The first link may be attached to the main body either releasably, for example by screws, or non-releasably, for example by press fit. Alternatively, the first link may be integral with the main body. What has been described above with regard to the first module and the first link may be generally applied to the second and third module (if present) and the second and third link (if present).

According to another preferred aspect of the invention, the second link comprises a pair of hinge elements, whereas the first link comprises a single hinge element that is to be arranged between the pair of hinge elements of the second link in an interdigitated relationship and linked thereto by a connecting rod. In this configuration, the first and second links form a joint link between the first and second module. For receiving the connecting rod both, the hinge element of the first link and the hinge elements of the second link, may comprise an aperture extending substantially perpendicular to the direction of travel of the conveyor belt, that is, substantially parallel to the opposing transverse sides of the first and second module and thus parallel to the longitudinal extension of the belt rows. Accordingly, the connecting rod may extend through the apertures of the hinge elements of the first and second links when the first and second links are aligned such as to interdigitate in overlapping relationship. Preferably, the apertures of the hinge elements of the second link may be elongated slots to allow radius belt travel. Likewise, the aperture of the hinge element of the first link may be also an elongated slot. Yet, the aperture of the hinge element of the first link preferably is a substantially circular aperture. Of course, the apertures of the first and second links may have an inverted configuration, that is, the aperture of the hinge element of the first link may be an elongated slot, whereas the apertures of the hinge elements of the second link may be substantially circular apertures.

Likewise, if present, the fourth link of the first module may comprise a pair of hinge elements and the third link of the third module may comprise a single hinge element that is to be arranged between the pair of hinge elements of the fourth link in an interdigitated relationship and linked thereto by a connecting rod, in particular as described above with regard to the first and second link.

Preferably, the at least one first link of the first module is a protrusion, in particular a bolt-like protrusion, extending in a direction perpendicular to the transverse side of the first module opposing the transverse side of the second module. The bolt-like protrusion may have a joint portion for linkage with the second link, for example an aperture for receiving a connecting rod as described above. The joint portion preferably is located at a free end of the first link. The load sensor may be arranged between the link portion and the other end of the first link opposite to the free end such as to enable a direct tension measurement between the first and second module of the load-sensing module assembly.

According to preferred embodiment of the invention, the first link comprises at least one leveled or flat surface portion. This surface portion preferably serves as mounting surface which the load sensor, in particular the strain gauge(s) may be attached to. Preferably, the first link may comprise two leveled or flat surface portions at opposite lateral sides of the first link. The latter configuration may be used in case the load sensor comprises four strain gauges as described above. Accordingly, the first link may comprise two leveled or flat surface portions at opposite lateral sides of the first link, wherein a respective pair of one longitudinal strain gauge and one transverse strain gauge is attached to each of the two leveled or flat surface portions. Advantageously, leveled or flat surfaces provide a well-defined mounting surface for strain measurements which proves particularly beneficial with regard to measurement accuracy. Furthermore, the at least one leveled or flat surface portion may be recessed with regard to other surface portions of the first link. Advantageously, this provides a protective mounting recess for the load sensor, in particular for the one or more strain gauges.

According to another advantageous aspect of the invention, at least the first link is made of steel, in particular stainless steel. Steel has a linear elongation behavior under load which proves beneficial with regard to accuracy of the load measurement. Preferably, the entire of first module is made of steel, in particular stainless steel. As described above, the first link may be either integral with or separate from a main body of the first module. Likewise, the second module and third module (if present) may be also made of steel, in particular stainless steel. Alternatively, at least the first link or the entire first module may be made of plastics. Likewise, the second module and third module (if present) may be made of plastics.

In addition to the first and second link, the first and second module may be linked by a further link joint, in particular by a further hinge joint. For example, this further link joint may include acknowledging rod which is laterally mounted to the inner lateral side of the first module and extends in a direction parallel to the inner side of the first module. The connecting rod main gauge with an aperture of a hinge element at the inner lateral side of the second module. Instead of the connecting rod attached to the first module, the aperture of the hinge element at the inner lateral side of the second module may also engage with a connecting rod used for linking the standard modules of belt rows. This latter connecting rod may also engage with an inner lateral aperture of the first module. Likewise, the first and third module (if present) may be linked by a further link joint, in particular by a further hinge joint, preferably as described above with regard to the further link joint between the first and second.

Furthermore, the transverse side of the second module opposing the transverse side of the first module may be slanted or tapered or recessed in a wedge-shaped manner along the length extension of the belt rows such as to allow radius belt travel, in particular to clear space for a portion of the first module during a turn of the conveyor belt.

According to yet another advantageous aspect of the invention, the sensor circuitry may be configured for wireless communication with a remote monitoring and control device. The remote monitoring and control device may be, for example, a device for monitoring and controlling operation of the entire conveyor belt. With regard to this, the belt tension measurements may be also used to adjust the operation of the conveyor belt or associated processes in a closed loop.

Preferably, the sensor circuitry may be configured for wireless communication using the 2.4 GHz section of the S band, that is, a WiFi type bandwidth. This frequency range is particularly suitable for many applications in industrial environments as being robust and rather unsusceptible to faults. Wireless communication is preferred as being the most convenient way for communication into and out of the moving system of the conveyor belt. As will be described further below, a modular conveyor belt may comprise a plurality of load-sensing module assemblies according to the invention. In this case, the sensor circuitries of the plurality of load-sensing module assemblies may be configured for wireless communication via different channels within the 2.4 GHz section of the S band. For example, each sensor circuitry of the plurality of load-sensing module assemblies may be configured to selectively communication via up to 16 channels within the 2.4 GHz section of the S band. By this, adverse interference effects between different load-sensing module assemblies can be avoided. Channel selection may be controlled by the remote monitoring and control device.

In particular, the sensor circuitry may be configured for wireless transfer of data representing measured tensile forces to a remote monitoring and control device. For this, the sensor circuitry may comprise a transmitter configured for wireless data transfer. Preferably, the sensor circuitry may be configured for real-time or continuous data transfer, in particular on a time scale of a data sampling rate of the sensor circuitry, for example on a timescale of 5 ms (milliseconds). Moreover, the sensor circuitry may be configured such as to transfer data representing measured tensile forces to a remote monitoring and control device only in case the measured tensile forces are above a pre-defined threshold. Advantageously, this helps to reduce power consumption. In particular, the threshold may be set by the remote monitoring and control device.

Alternatively or additionally, the sensor circuitry may be configured to be remotely controlled by the monitoring and control device. In particular, the sensor circuitry may be configured for wireless reception of control signals from the remote monitoring and control device. For this, the sensor circuitry comprises a receiver configured for wireless reception of control signals. Preferably, the sensor circuitry may be configured to measure tensile forces deliberately on remote demand in particular on remote demand only. Alternatively or additionally, the sensor circuitry may be configured to measure tensile forces on a regular time base, for example, once per hour, once per day, or the like. Accordingly, a frequency and/or a time length of a data measurement can be remotely controlled by the monitoring and control device. Advantageously, this allows for modification of the frequency and/or a time length of data measurement which might be necessary, for example, in case an unexpected value of the tensile force is measured. In this case, a higher frequency and/or longer time length may be applied until a technical issue is identified and solved, for example, until cleaning or lubrication of the conveyor belt. Likewise, a threshold above which the sensor circuitry starts wireless transfer of data representing measured tensile forces may be set by the remote monitoring and control device.

Moreover, the sensor circuitry may be configured to be remotely set in a standby or sleep modus, in particular by the remote monitoring and control device. Advantageously, this permits reducing power consumption. With regard to standby of sleep modus, the sensor circuitry may be further configured to periodically awake from the standby or sleep modus for a short time to make an inquiry about a possible remote demand for a data measurement.

According to another preferred aspect of the invention, the sensor circuitry - apart from the load sensor - may be arranged on a circuit board. Preferably the circuit board is laterally attached to the first module. Additionally, the circuit board may be received in or covered by a housing, in particular a plastic housing. The housing may be separate from the main body of the first module. In particular, the circuit board may comprise at least one antenna for wireless communication with a remote monitoring and control device. Lateral attachment of the circuit board to the first module proves advantageous for undisturbed wireless communication.

Preferably, the sensor circuitry is powered by a power supply attached to the first module. Advantageously, this permits to confine the wiring to the fist module only. Preferably, the power supply is a battery or battery pack comprising a plurality of batteries. For example, the one or more batteries a lithium ion batteries. Alternatively, the sensor circuitry may be configured for inductive power transmission from an external inductive power source, for example via an inductive power transmission along a portion of the traveling path of the conveyor belt.

According to another advantageous aspect of the invention, the module assembly may further comprise a radio-frequency identification (RFID) transponder for detecting the position and/or the path velocity of the module assembly along the conveyor belt and/or the global position of the module assembly at a working area of the conveyor belt. Advantageously, this allows for localizing possible technical problems along the travelling path of the conveyor belt.

According to yet another preferred aspect of the invention, the first module may comprise a cavity or compartment, such as a cavity or compartment for accommodating a power supply for the sensor circuitry. The cavity or compartment may be formed within a main body of the first module. The cavity or compartment may have an opening for receiving an item to be accommodated therein, such as a battery. The first module may further comprise a cover for releasably closing the opening of the cavity or compartment. Preferably, the cover sealingly closes the cavity or compartment. For this, the cover or compartment and/or a main body of the first module may comprise a seal encircling the opening of the cavity or compartment when attached to the main body of the first module. Alternatively or additionally, a main body of the first module may comprise a seal encircling the opening of the cavity or compartment. For example, the seal may be a silicone or a rubber seal, such as a silicone or rubber gasket. Preferably, the cover may be attached to a main body of the first module by screws.

According to a particularly preferred aspect, the cover may form at least partially one or more of outer hinge elements along the outer transverse side of the module assembly. Advantageously, this provides a very simple and compact design of the first module. In addition, this facilitates assembly of the first module to another module of the conveyor belt in an adjacent row. This is due to the releasably mountable cover which enables to open the hinge element for engagement with a connecting rod along a direction substantially perpendicular to the rod axis.

Another aspect of the invention relates to a load-sensing system for a modular conveyor belt. The system comprises at least one load-sensing module assembly according to the invention and as described herein. The system further comprises a remote monitoring and controlling device, wherein the remote monitoring and control device and the load-sensing module assembly are configured for wireless communication, in particular for bi-directional wireless communication.

As described above, the remote monitoring and control device preferably is a device for monitoring and controlling operation of the entire conveyor belt for remote control of the sensor circuitry of the load-sensing module assembly. With regard to the module assembly according to the invention, the remote monitoring and control device and particular configured for receiving the measured tensile force data and preferably also for controlling operation of the load-sensing module assembly. In particular, the remote monitoring and controlling device may configured to request a belt tension measurement on demand, to control a frequency and/or a time length of a data measurement, and/or to set the sensor circuitry of the load-sensing module assembly into a standby or sleep modus. For wireless communication with the module assembly, the remote monitoring and controlling device may comprise at least one of a transmitter and a receiver. Furthermore, the remote monitoring and controlling device may be configured for data transfer into a cloud-based storage.

Moreover, the load-sensing system may comprise a plurality of load-sensing module assemblies according to the invention. With regard to this, the remote monitoring and control device may be configured to communicate with each of the plurality of load load-sensing module assemblies.

Yet another aspect of the invention relates to a modular conveyor belt comprising at least one load-sensing module assembly according to the invention and as described herein or a load arranged at different location along the belt. Preferably, the modular conveyor belt may be a side-flexing radius or spiral modular conveyor belt.

As described above, the modular conveyor belt comprises successive rows of one or more belt modules linked together by interleaving hinge elements, wherein each row extends in the direction generally perpendicular to the direction of travel of the conveyor belt. The first and second module of the at least one load-preventing double are arranged in adjacent rows of the conveyor belt in place of a two standard belt modules. Preferably, the first and second module of the at least one module assembly are arranged at an outside portion of the conveyor belt.

As used herein, any transverse side of the first module or second module or third module (if present) as well as the transverse outer side of the module assembly extend in a direction generally parallel to the longitudinal extension of the belt rows, that is, generally perpendicular to the direction of travel of the conveyor belt.

As used in the specification including the appended claims, the singular forms "a", "an", and "the" include the plural, unless the context explicitly dictates otherwise. When using the term "about" with reference to a particular numerical value or a range of values, this is to be understood in the sense that the particular numerical value referred to in connection with the "about" is included and explicitly disclosed, unless the context clearly dictates otherwise. For example, if a range of "about" numerical value A to "about" numerical value B is disclosed, this is to be understood to include and explicitly disclose a range of numerical value A to numerical value B. Also, whenever features are combined with the term "or", the term "or" is to be understood to also include "and" unless it is evident from the specification that the term "or" must be understood as being exclusive.

### BRIEF DESCRIPTION OF THE DRAWINGS

Further advantageous aspects of the invention become apparent from the following description of an exemplary embodiment of the invention with the aid of the drawings, in which:
- Fig. 1: shows a perspective view of a portion of a modular conveyor belt comprising a load-sensing module assembly according to a first exemplary embodiment of the invention;
- Fig. 2: shows a top view of the modular conveyor belt according to Fig. 1 as making a turn;
- Fig. 3: shows a bottom view of the modular conveyor belt according to Fig. 1 as making a turn;
- Fig. 4: shows a top view of the load-sensing module assembly according to Fig. 1;
- Fig. 5: shows a perspective view of the load-sensing module assembly according to Fig. 1 from above;
- Fig. 6: shows a perspective view of the load-sensing module assembly according to Fig. 1 from below;
- Fig. 7: shows a perspective view of the load-sensing module assembly according to Fig. 1 from below with removed cover;
- Fig. 8: shows a perspective view from above of a load-sensing module assembly according to a second embodiment of the invention;
- Fig. 9: shows an exploded view of the load-sensing module assembly according to Fig. 8; and
- Fig. 10: shows a portion of a modular conveyor belt comprising a load-sensing a loadsensing module assembly according to a third embodiment of the invention.

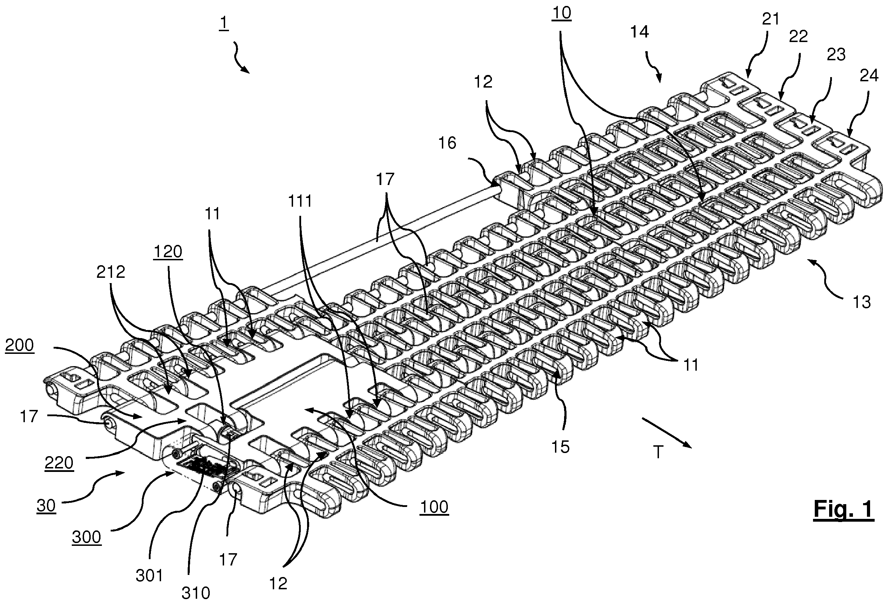

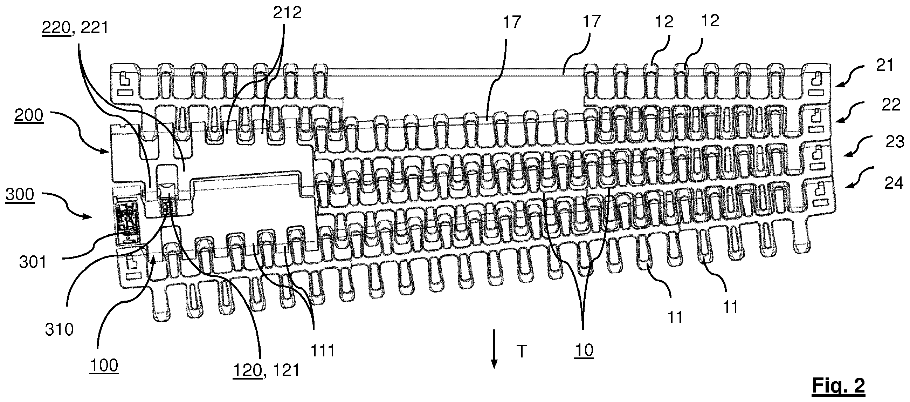

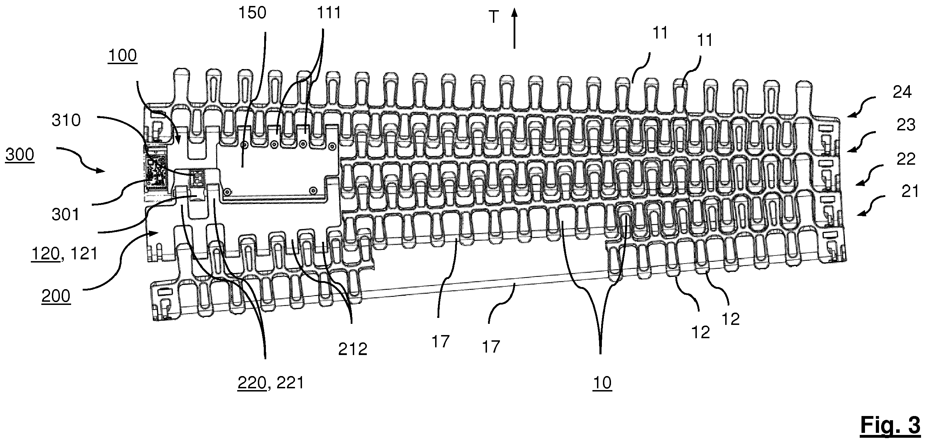

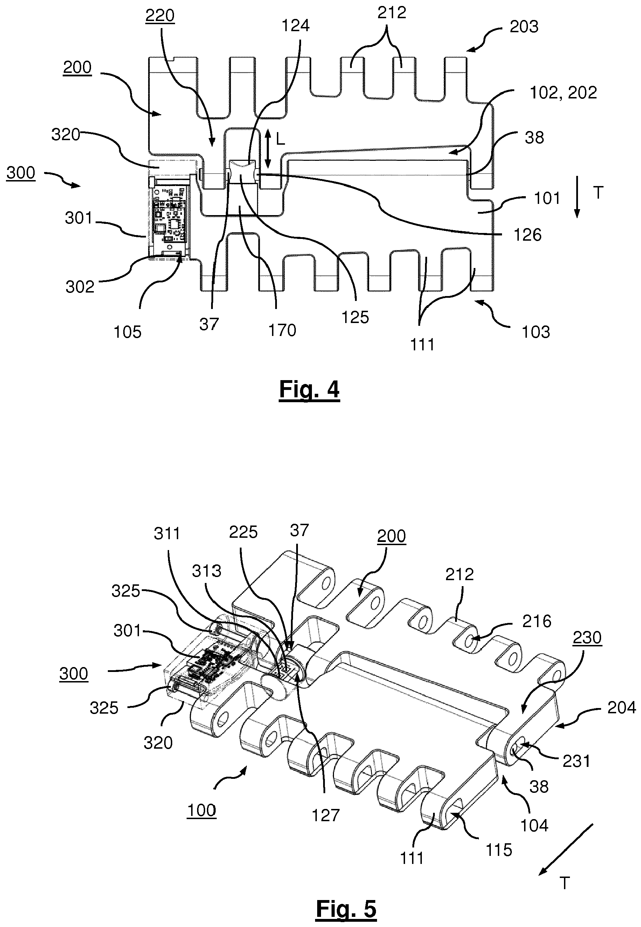

Figs. 1 to 3 show a portion of a modular conveyor belt 1 comprising a load-sensing module assembly 30 according to a first exemplary embodiment of the invention. Details of the load-sensing module assembly 30 are shown in Figs. 4 to 7. The conveyor belt 1 according to this first embodiment is a side-flexing belt radius or spiral belt capable of negotiating turns or wrapping helically around a spiral-conveyor drum. The conveyor belt 1 includes successive rows 21, 22, 23, 24 of one or more standard belt modules 10, wherein each row 21, 22, 23, 24 extends in the direction generally perpendicular to the direction of travel T of the conveyor belt 1. The belt 1 may be, for example, driven by means of idle sprockets and return rollers (not shown).

The standard belt modules 10 of adjacent belt rows 21, 22, 23, 24 are linked together by interleaving hinge elements 11, 12 that are laterally spaced apart along leading and trailing ends of each row. The hinge elements 11, 12 comprise aligned openings 15, 16 which form lateral passageways through interleaved hinge elements 11, 12. Connecting rods 17 are received in these lateral passageways to connect the belt rows 21, 22, 23, 24 together in a hinge-joint manner. The openings 15 in the leading hinge elements 11 are elongated in the direction of belt travel T to allow the inside edge to collapse in a turn. In contrast, the openings 16 in the trailing hinge elements 12 are substantially circular. Of course, the openings 16 may also be elongated.

To enable monitoring of the performance and possible operational failures of the conveyor belt 1 as well as to allow for adjustment of the belt tension, detection of the tensile forces within the conveyor belt 1, in particular between adjacent modules, is crucial. The majority of the belt tension is borne by the hinge elements at the outside of the turn, whereas the collapsed inside edge and the interior portions of the belt carry almost no tension in a turn. For this reason, a load-sensing module assembly 30 according to the invention is positioned at the outside edge of the conveyor belt 1 as shown in Figs. 1 to 3. The module assembly 30 comprises a first module 100 and a second module 200 that are arranged in adjacent rows 22, 23 of the conveyor belt 1 in place of two standard belt modules 10 or a belt module edge portion.

As can be particularly seen in Figs. 4 to 7, the first module 100 and the second module 200 are linked together by a first link 120 of the first module 100 and a second link 220 of the second module 200. The first and second links 120, 220 are arranged at opposing transverse sides 102, 202 of the first and second module 100, 200, respectively. Along the respective outer transverse side 103, 203 of the module assembly 30 - opposite to the opposing transverse sides 102, 202 - each of the first module and the second module 100, 200 comprises a plurality of outer hinge elements 111, 212 which are configured to interleave with hinge elements 11, 12 of the standard belt modules 10 of the respective other adjacent belt row 21, 24. Like the hinge elements 11, 12 of the standard belt modules 10, the outer hinge elements 111, 212 of the first and second module 100, 200 comprise aligned openings 115, 216 forming lateral passageways with the openings 15, 16 of the interleaved hinge elements 11, 12 of the adjacent belt modules 10. As shown in Figs. 1 to 3, connecting rods 17 are received in these lateral passageways such as to connect the first and second module 100, 200 and the standard modules 10 of the respective rows 21, 24 together. The openings 115 of the outer hinge elements 111 of the first module 100 are elongate to allow radius belt travel.

As can be further seen in Figs. 4 to 7, the second link 220 of the second module 200 comprises a pair of hinge elements 221 similar to the outer hinge elements 212. In contrast, the complementary first link 120 of the first module 100 comprises a single hinge element 121 that is arranged between the pair of hinge elements 221 of the second link 220 in an interdigitated relationship. Both, the hinge element 121 of the first link 120 and the hinge elements 221 of the second link 220, comprise apertures 126, 225 extending generally perpendicular to the direction of travel T of the conveyor belt 1 such as to form a lateral passageway through which a connecting rod 37 extends for linking the first and second module 100, 200 together. The aperture 126 of the hinge element 121 of the first link 120 is substantially circular. In contrast, the apertures 225 of the hinge elements 221 of the second link 220 are elongated slots to allow radius belt travel.

In addition to the first and second links 120, 220, the first module 100 and second module 200 are linked by a further hinge joint. As can be particularly seen in Figs. 4 and 5, this further joint includes a connecting rod 38 which is laterally mounted to the inner lateral side 104 of the first module 100 and extends in a direction parallel to the transverse side 102 of the first module 100 opposing the transverse side 202 of the second module 200. The connecting rod 38 engages with an aperture 231 of a hinge element 230 at the inner lateral side 204 of the second module 200. Instead of the connecting rod 38, the aperture 231 of the hinge element 230 at the inner lateral side 203 of the second module 200 may also engage with a connecting rod 17 used for linking the standard modules 10 of belt rows 22, 23 within the same rows (not shown). This connecting rod may also engage with an inner lateral aperture of the first module 100.

The first link 120 of the first module 100 is a bolt-like protrusion which is integral with the main body 101 of the first module 100 and extends in a direction perpendicular to the transverse side 102 of the first module 100 opposing the transverse side 202 of the second module 200, that is, substantially parallel to the direction of travel T. The aperture 126 used for receiving the connecting rod 37 that forms the linkage with the second module 200 is located in a link portion 125 at a free end 124 of first link 120.

In order directly measure the belt tension between the first and second module 100, 200, a load sensor 310 is arranged between the aperture 126 at the free end 124 and the other end of the first link opposite to the free end 124. In the present embodiment, the load sensor 310 comprises four strain gauges 311, 312, 313, 314 arranged in two pairs, wherein each pair includes one longitudinal strain gauge 311, 313 and one transverse strain gauge 312, 314. The longitudinal strain gauges 311, 313 are arranged such as to be sensitive along a direction perpendicular to the transverse sides 102, 103 of the first module 100, that is, in a direction substantially parallel to a length extension L of the first link 120 along the direction of travel T of the conveyor belt 1. Vice versa, the transverse strain gauges 312, 314 are arranged such as to be sensitive along a direction parallel to the transverse sides 102, 103 of the first module 100, that is, in a direction substantially perpendicular to a length extension L of the first link 120 along the direction of travel T of the conveyor belt 1. The two pairs are arranged on respective leveled, flat surface portions 127 at opposite lateral sides of the first link 120. The four strain gauges 311, 312, 313, 314 are protected by a sleeve or jacket 170, for example made of stainless steel.

Circuit-wise, the four strain gauges are arranged in a so-called full-bridge configuration of a Wheatstone bridge, wherein each resistive arm of the bridge configuration includes one of the four strain gauges 311, 312, 313, 314 and wherein respective pairs of one longitudinal strain gauge 311, 313 and one transverse strain gauge 312, 314 are arranged in two resistive arms in serial connection.

For read out of the strain gauges 311, 312, 313, 314, the load-sensing module assembly comprises a sensor circuitry 300. According to the invention, the sensor circuitry 300 is exclusively attached to the first module 100, in particular to an outer lateral side 105 of the first module 100 opposite to the inner lateral side 104. The sensor circuitry 300 preferably is configured for processing, in particular for conditioning, digitalizing, logging, filtering and/or scaling, the output of the bridge configuration. Furthermore, the sensor circuitry 300 may be configured for converting the processed data to radio signals for wireless transfer from the belt to a remote monitoring and control device (not shown). For this, sensor circuitry 100 may comprise, among other components, a processor, a transmitter, a receiver and an antenna 302. Preferably, the sensor circuitry 300 is configured for wireless communication using the 2.4 GHz section of the S band. Preferably, the sensor circuitry is also configured to selectively communication via up to 16 channels within the 2.4 GHz section of the S band. Data transfer may occur continuously or on the timescale of the data sampling rate, for example on a timescale of 5 ms.

In addition, the sensor circuitry 300 according to the present embodiment is configured to be remotely controlled by the external monitoring and control device. For this, the sensor circuitry 300 comprises a receiver configured for wireless reception of control signals from the remote monitoring and control device. Moreover, the sensor circuitry is configured to be remotely set in a standby or sleep modus. Advantageously, this permits reducing power consumption.

In the present embodiment, the sensor circuitry 300 - apart from the four strain gauges 311, 312, 313, 314 - is arranged on a circuit board 301 that is laterally attached to the outer lateral side 105 of the first module 100, for example by screws 325. The circuit board 301 is covered by a plastic housing 320 that is separate from the main body 101 of the first module 100. The lateral attachment of the circuit board 301 to the first module 100 proves advantageous with regard to an undisturbed wireless communication.

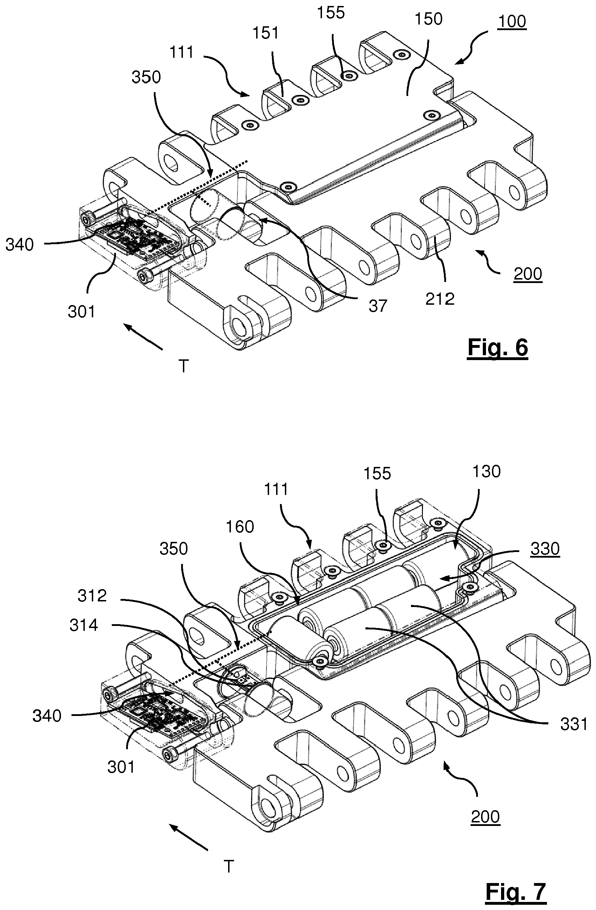

The sensor circuitry 300 is energized by a power supply 330, for example, by a battery pack 330 comprising a plurality of batteries 331 that are accommodated in a cavity 130 formed within the main body 101 of the first module 100 opposite the mounting place of the circuit board 300. A channel 340 extends through the main body in a direction substantially parallel to the transverse side 102 of the first module 100 opposing the transverse side 202 of the second module 200. The channel 340 connects the mounting place of the circuit board 300 with the cavity 130. The channel 340 may also comprise a branch towards the first link 120. Advantageously, the channel 340 serves as cable duct protectively receiving the wiring 350 between the circuit board 300, the battery pack 330 and the strain gauges 311, 312, 313, 314 (symbolized by dotted line in Figs. 6 and 7).

The opening 131 of the cavity 130 is releasably closed by a cover 150. Preferably, the cover 150 sealingly closes the cavity 130. For this, the main body 101 of the first module 100 comprises a seal 160 encircling the opening of the cavity for sealingly closing the cavity with cover. In addition, the cover 150 comprises a plurality plate-like protrusion 151 forming at least portion of four outer hinge elements 111 along the outer transverse side 103 of the first module 100. The cover 150 may be attached to a main body 101 of the first module 100 by means of screws 155. As can be particularly seen in Fig. 4, the transverse side 202 of the second module 200 opposing the transverse side 102 of the first module 100 is slanted or tapered or recessed in a wedge-shaped manner along the length extension of the belt rows such as to allow radius belt travel, in particular to clear space for that portion of the first module 100 which includes the cavity 130.

In the present embodiment, the entire first and second modules 100, 200, in particular the first and second links 120, 220, are made of steel, for example stainless steel. Steel has a linear elongation behavior under load which proves beneficial with regard to the accuracy of the load measurement.

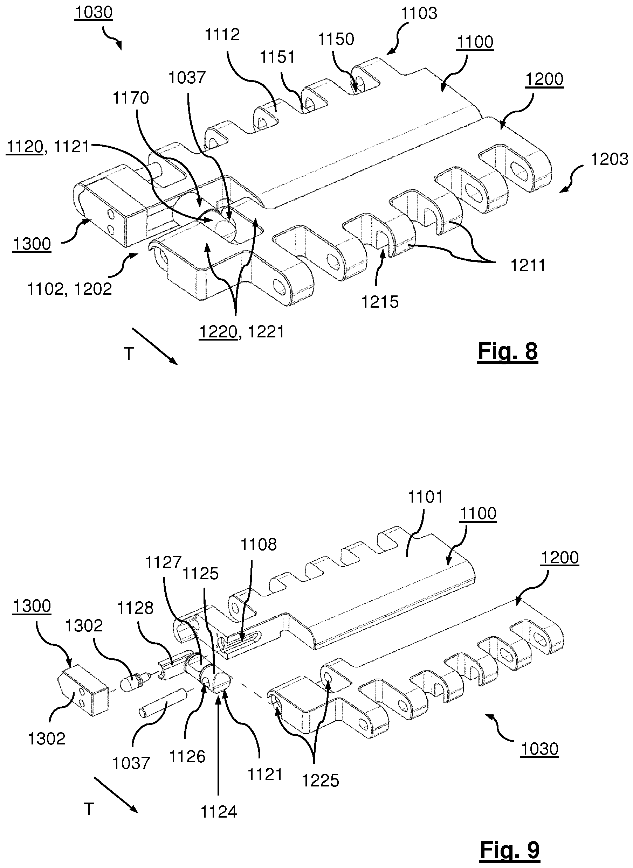

Figs. 8 and 9 show a load-sensing module assembly 1030 according to a second embodiment of the invention which is similar to the load-sensing module according to the first embodiment. Therefore, like or identical features are denoted by reference numeral incremented by 1000 as compared to those used for the description of the first embodiment, In contrast to the first embodiment, the first module 1100 according to the second embodiment is not a leading module but a trailing module with regard to the direction of travel T of the conveyor belt. Vice versa, the second module 1200 is not a trailing module but a leading module with regard to the direction of travel T of the conveyor belt. That is to say, the position of the first and second module 1100, 1200 is inverted with regard to the direction of travel T of the conveyor belt. Accordingly, the bolt-like first hinge element 1121 of the first link 1120 protrudes from the transverse side of the first module 1100 in the direction of travel T of the conveyor belt, whereas the two hinge elements 1221 of the second link 1220 protrude from the transverse side of the second module 1200 in a direction opposite to the direction of travel T of the conveyor belt.

Further in contrast to the first embodiment, the first and second module 1100, 1200 of the module assembly 1030 according to the second embodiment are not linked by a further hinge joint, but only by the first and second link 1120, 1220 and connecting rod 1037 extending through aligned apertures 1126, 1225 in the first and second link 1120, 1220.

Yet further in contrast to the first embodiment, the first link 1120, that is, the first hinge link 1120 of the first module 1100 is not integral with the main body 1101 of the first module 1100 but separate therefrom, Advantageously, this simplifies manufacturing of the first module, in particular machining of the first link and the main body as well as mounting of the load sensor to the first link. As can be particularly seen from Fig. 9, the first link 1120 according to the second embodiment is L-like having a short branch and long branch. The long branch of the L is the bolt-like hinge element 1121, mentioned above, that is similar to the bolt-like hinge element 121 according to the first embodiment. That is, the bolt-like hinge element 1121 comprises a link portion 1125 at a free end 1124 of the first link including the aperture 1126 as well as two leveled, flat surface portions 1127 at opposite lateral sides forming recesses for mounting the strain gauges (not shown). Analogous s to first embodiment, the strain gauges are protected by a sleeve or jacket 1170, for example made of stainless steel. The short branch of the L includes a profiled fixing base 1128 that is laterally received in a groove 1108 of the main body 1101 having a complementary back-tapered profile. Once received in the groove 1108, the fixing base 1128 is bound in a form-fitting manner along the direction of travel T due to the complementary back-tapered profile the groove 1108. Preferably, the fixing base 1128 is press fit in the groove 1108 such that the first link 1120 is non-releasably attached to the main body 1101.

As can be further seen from Fig. 8 and 9, the groove 1108 and the fixing base 1128 form a cavity or slot for receiving and antenna 1302 that is part of the sensor circuitry 1300 of the module assembly 1030 according to the second embodiment. Analogous to the first embodiment, the majority of the components of the sensor circuitry 1300 may be mounted on a circuit board (not shown) that is laterally attached to the main body 1101 of the first module 1100 and covered by a plastic housing 1302. The first module 1100 also comprises a cavity or compartment containing a power supply, such as a battery pack, powering the sensor circuitry 1300. The cavity may be releasably and sealingly closed by a cover 1150. In addition, the cover 1150 comprises a plurality plate-like protrusion 1151 forming at least portion of four outer hinge elements 1112 along the outer transverse side 1103 of the first module 1100. As can be further seen from Fig. 8 and 9, two of the outer hinge elements 1211 along the outer transverse side 1203 of the second module 1200 are partially open. Advantageously, this facilitates machining of the apertures 1215 of these hinge elements 1211.

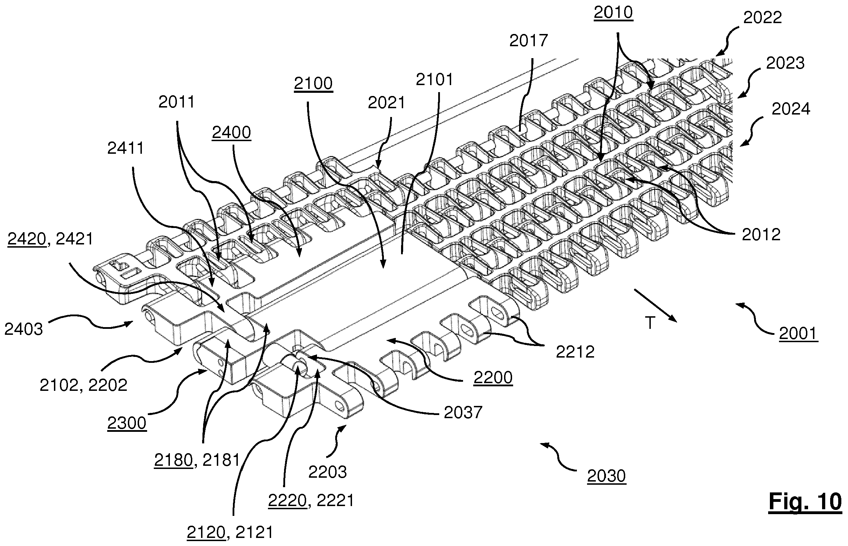

Fig. 10 shows another module assembly 2030 according to a third embodiment of the invention which is similar to the load-sensing module according to the second embodiment. Therefore, like or identical features are denoted by reference numeral incremented by 1000 as compared to those used for the description of the second embodiment, In contrast to the second embodiment, the module assembly 2030 according to the third embodiment comprises a third module 2400 in addition to the first and second module 2100, 2200. The third module 2400 is arranged adjacent to the first module opposite 2100 to the second module 2200 in a row 2022 adjacent to the row 2023 of the first module 2100 opposite to the row 2024 of the second module 2200. Accordingly, the sensor circuitry 2300 carrying first module 2100 is arranged between the second and third module 2200, 2400. The third module 2400 and first module 2100 are linked together by a third link 2420 of the third module 2400 and a fourth link 2180 of the first module 2100. The third and fourth links 2180, 2420 are arranged at opposing transverse sides 2102, 2202 of the first and third module 2100, 2400, respectively. The second and third module 2200, 2400 form outer (leading and trailing) modules of the module assembly 2030 that are linked by connecting rods 2017 with the hinge elements 2011, 2012 of the standard belt modules 2010 of respective adjacent rows along either transverse outer side 2203, 2403 of the module assembly 2030. For this, each of the second and third module 2200, 2400 comprises a plurality of outer hinge elements 2212, 2411 that interleave with the hinge elements 2011, 2012 of the standard belt modules 2010. Due to this, the first module 2100 does not need to be configured for linkage with any standard belt module and thus does not comprise any outer hinge elements. Advantageously, this allows the first module 2100 to provide additional space, e.g. for accommodating a larger power supply or larger number of batteries. In order to further maximize this additional space, the third and first module are linked together exclusively by the third link and the fourth link.

Analogue to the first and second link 2120, 2220 between the first and second module 2100, 2200, the fourth link 2180 of the first module 2100 comprises a pair of hinge elements 2181 and the third link 2420 of the third module 2400 comprises a single hinge element 2421 that is arranged between the pair of hinge elements 2181 of the fourth link 2180 in an interdigitated relationship and linked thereto by a connecting rod, in particular as described above with regard to the first and second embodiment.

While the invention has been described in connection with certain preferred embodiments, it is not intended to limit the scope of the invention to the particular forms set forth, but, on the contrary, it is intended to cover such alternatives, modifications, and equivalents as may be included within the scope of the invention as defined by the appended claims.

## Claims

1. Load-sensing module assembly (30; 1030; 2030) for a modular conveyor belt (1; 2001) having successive rows (21, 22, 23, 24; 2021, 2022, 2023, 2024) of one or more belt modules (10; 2010) linked together by hinge elements (11, 12; 2011, 2012), the module assembly (30; 1030; 2030) comprising at least a first module (100; 1100; 2100) and a second module (200; 1200; 2200) configured for arrangement in adjacent rows (22, 23; 2023, 2024) of the conveyor belt (1; 2001), wherein the first and second module (100, 200; 1100, 1200; 2100, 2200) are linked together by at least one first link (120; 1120; 2120) of the first module (100; 1100; 2100) and at least one second link (220; 1220; 2220) of the second module (200; 1200; 2200), wherein the first and second links (120, 220; 1120, 1220; 2120, 2220) are arranged at opposing transverse sides (102, 202; 1102, 1202; 2102, 2202) of the first and second module (100, 200; 1100, 1200; 2100, 2200), respectively, wherein the module assembly (30; 1030; 2030) is configured to be linked with at least one hinge element (11, 12; 2011, 2012) of at least one belt module (10; 2010) of a respective adjacent row (21, 24; 2021) of the conveyor belt (1; 2001) along either transverse outer side (103, 203; 1103, 1203; 2203, 2403) of the module assembly (30; 1030; 2030), and wherein the module assembly (30; 1030; 2030) further comprises a sensor circuitry (300; 1300; 2300) including a load sensor (310) for measuring a belt tension in at least a portion of the module assembly (30; 1030; 2030), **characterized in that** the load sensor (310) is arranged at the first link (120; 1120; 2120) for measuring a tensile force between the first and second module (100, 200; 1100, 1200; 2100, 2200).

2. Module assembly (30; 1030; 2030) according to claim 1, wherein the sensor circuitry (300; 1300; 2300) is exclusively attached to the first module (100; 1100; 2100).

3. Module assembly (30; 1030; 2030) according to claim 1 or 2, wherein the load sensor (310) includes at least one longitudinal strain gauge (311, 313) arranged to be sensitive in a direction parallel to a length extension (L) of the first link (120; 1120; 2120) along a direction of travel (T) of the conveyor belt (1; 2001).

4. Module assembly (30; 1030; 2030) according to claim 3, wherein the load sensor (310) includes at least one parallel strain gauge (312, 314) arranged to be sensitive along a direction perpendicular to a length extension (L) of the first link (120; 1120; 2120) along a direction of travel (T) of the conveyor belt (1; 2001).

5. Module assembly (30; 1030; 2030) according any one of the preceding claims, wherein the load sensor (310) includes at least two longitudinal strain gauges (311, 313) arranged to be sensitive along a direction parallel to a length extension (L) of the first link (120; 1120; 2120) along a direction of travel (T) of the conveyor belt (1; 2001), and at least two transverse strain gauges (312, 314) arranged to be sensitive along a direction perpendicular to a length extension (L) of the first link (120; 1120; 2120) along a direction of travel (T) of the conveyor belt (1; 2001).

6. Module assembly (30; 1030; 2030) according to claim 5, wherein two pairs each of which comprising one longitudinal strain gauge (311, 313) and one transverse strain gauge (312, 314) are arranged on opposite longitudinal sides of the first link (120; 1120;2120).

7. Module assembly (30; 1030; 2030) according to any one of claims 3 to 6, wherein the sensor circuitry (300; 1300; 2300) comprises a Wheatstone bridge having four resistive arms, wherein a respective one of the at least one or two longitudinal or transverse strain gauges (311, 312, 313, 314) is arranged in one of the four restive arms.

8. Module assembly (2030) according to any one of the preceding claims, further comprising at least one third module (2400) arranged adjacent to the first module (2100) opposite to the second module (2200) and configured for arrangement in a row (2022) adjacent to the row (2023) of the first module (2100) opposite to the row (2024) of the second module (2200), wherein the third module (2400) and first module (2100) are linked together by at least one third link (2420) of the third module (2400) and at least one fourth link (2180) of the first module (2100), wherein the third and fourth links (2420, 2180) are arranged at opposing transverse sides (2102, 2202) of the first and third module (2100, 2400), respectively.

9. Module assembly (30; 1030; 2030) according to any one of the preceding claims, wherein the first module (100; 1100; 2100) comprises a main body (101; 1101; 2101), and wherein the first link (120; 1120; 2120) is integral with the main body (101; 1101; 2101) or attached, in particular releasably or non-releasably attached to the main body (101; 1101; 2101).

10. Module assembly (30; 1030; 2030) according to any one of the preceding claims, wherein at least the first link (120; 1120; 2120) is made of steel or plastics.

11. Module assembly (30; 1030; 2030) according to any one of the preceding claims, wherein the second link (220; 1220; 2220) comprises pair of hinge elements (221; 1221; 2221) and the first link (120; 1120; 2120) comprises a single hinge element (121; 121; 2121) arranged between the pair of hinge elements (221; 1221; 2221) of the second link (220; 1120; 2120) and linked thereto by a connecting rod (37; 1037; 2037).

12. Module assembly (30; 1030; 2030) according to any one of the preceding claims, wherein the sensor circuitry (300; 1300; 2300) apart from the load sensor (310) is arranged on a circuit board (301) laterally attached to the first module (100; 1100; 2100).

13. Module assembly (30; 1030; 2030) according to any one the preceding claims, wherein the sensor circuitry (300; 1300; 2300) is configured for wireless communication with a remote monitoring and control device, in particular wherein the sensor circuitry (300; 1300; 2300) is configured to measure a tensile force on remote demand from the remote monitoring and control device.

14. Module assembly (30; 1030; 2030) according to any one of the preceding claims, further comprising a radio-frequency identification transponder for detecting the position and/or the path velocity of the module assembly (30; 1030; 2030) along the conveyor belt (1; 2001) and/or the global position of the module assembly (30; 1030; 2030) at a working area of the conveyor belt (1; 2001).

15. Module assembly (30; 1030) according to any one of the preceding claims, wherein the first module (100; 1100; 2100) comprises a cavity (130) or compartment, in particular configured to accommodate a power supply (330) for the sensor circuitry (300; 1300; 2300), and a cover (150; 1150) for releasably closing an opening (131) of the cavity (130) or compartment, wherein the cover (150; 1150) forms at least partially one or more of outer hinge elements (111; 1112) along the outer transverse side (103; 1103) of the module assembly (30; 1030).

16. Load-sensing system for a modular conveyor belt (1; 2001), the system comprising at least one load-sensing module assembly (30; 1030; 2030) according to any one of the preceding claims, and a remote monitoring and control device, wherein the remote monitoring and control device and the load-sensing module assembly (30; 1030; 2030) are configured for wireless communication.

17. Modular conveyor belt (1; 2001), the modular conveyor belt (1; 2001) comprising at least one load-sensing module assembly (30; 1030; 2030) according to any one of claims 1 to 15 or a load-sensing system according to claim 16.
